# FASCICULE DE BREVET EUROPEEN

(11) **EP 1 527 118 B1**
(45) Date de publication et mention de la délivrance du brevet: **21.06.2006**
(21) Numéro de dépôt: 03758202.0
(22) Date de dépôt: 04.08.2003
(51) Int. Cl.: C08G 61/10

(54) **POLYMERES DE TYPE POLYPHENYLENES, LEUR PROCEDE DE PREPARATION, MEMBRANES ET DISPOSITIF DE PILE A COMBUSTIBLE COMPRENANT CES MEMBRANES**
POLYPHENYLENPOLYMERE, VERFAHREN FÜR IHRE HERSTELLUNG, MEMBRANE UND BRENNSTOFFZELLE DIE DIESE ENTHALTEN
POLYPHENYLENE-TYPE POLYMERS, PREPARATION METHOD THEREOF, MEMBRANES AND FUEL CELL DEVICE COMPRISING SAID MEMBRANES

(30) Priorité: 06.08.2002 FR 0210008
(43) Date de publication de la demande: 04.05.2005
(73) Titulaire: COMMISSARIAT A L'ENERGIE ATOMIQUE, 75752 Paris Cédex 15 (FR)
(72) Inventeur: BALLAND-LONGEAU, Alexia, F-37000 Tours (FR); PEREIRA, Franck, F-38200 Luzinay (FR); MERCIER, Régis, F-69540 Irigny (FR); CAPRON, Phillippe, 38200 Luzinay (FR)
(74) Mandataire: Poulin, Gérard
(86) Numéro de dépôt international: PCT/FR2003/002455
(87) Numéro de publication internationale: WO 2004/014981

(56) Documents cités:
- WO-A-96/28491
- WO-A-98/55534
- DE-A- 19 535 086
- US-A- 5 403 675
- DATABASE CHEMABS CHEMICAL ABSTRACTS SERVICE, COLUMBUS, OHIO, US; TAKAHASHI, M ET AL.: "Preparation of curable polyarylenes bearing sulfonic acid for proton-conductive membranes" XP002241914 & JP 2001 291443 A (JSR LTD) 19 octobre 2001 (2001-10-19)

## Description

### DOMAINE TECHNIQUE

La présente invention a trait à des polymères comprenant des motifs répétitifs phénylènes porteurs de groupements ioniques perfluorés et leur procédé de préparation.

Ces polymères, possédant d'excellentes propriétés physicochimiques, telles que la conductivité protonique et la stabilité chimique, trouvent en particulier leur application dans la préparation de membranes échangeuses d'ions, destinées aux piles à combustible fonctionnant à haute température, jusqu'à des températures voisines de 140 à 160°C.

Par conséquent, le domaine de l'invention est également celui des membranes préparées avec lesdits polymères et des dispositifs de pile à combustible à électrolyte solide comprenant au moins une de ses membranes.

Le domaine de l'invention peut être défini comme celui des piles à combustible, et plus particulièrement des piles à combustible ayant une membrane comme électrolyte tels que les piles PEMFC (« Proton Exchange Membrane Fuel Cell » pour Pile à combustible à membrane échangeuse de protons) et DMFC (« Direct Methanol Fuel Cell » pour Pile à combustible directe au méthanol).

### ETAT DE LA TECHNIQUE ANTERIEURE

Une pile à combustible comporte, généralement, un empilement de cellules élémentaires, au sein desquelles a lieu une réaction électrochimique entre deux réactifs qui sont introduits de manière continue. Le combustible, tel que l'hydrogène, pour les piles fonctionnant avec des mélanges hydrogène/oxygène, ou le méthanol pour des piles fonctionnant avec des mélanges méthanol/oxygène, est amené au contact de l'anode, alors que le comburant, généralement l'oxygène, est amené au contact de la cathode. L'anode et la cathode sont séparées par un électrolyte, de type membrane échangeuse d'ions. La réaction électrochimique, dont l'énergie est convertie en énergie électrique, se scinde en deux demi-réactions :
- une oxydation du combustible, se déroulant à l'interface anode/électrolyte produisant, dans le cas des piles à hydrogène des protons- H+, qui vont traverser l'électrolyte en direction de la cathode, et des électrons, qui rejoignent le circuit extérieur, afin de concourir à la production d'énergie électrique ;
- une réduction du comburant, se déroulant à l'interface électrolyte/cathode, avec production d'eau, dans le cas des piles à hydrogène.

La réaction électrochimique a lieu, à proprement parler, au niveau d'un assemblage électrode-membrane-électrode.

L'assemblage électrode-membrane-électrode est un assemblage très mince d'une épaisseur de l'ordre du millimètre et chaque électrode est alimentée par l'arrière, par les gaz, par exemple à l'aide d'une plaque cannelée.

Les densités de puissance obtenues par un tel assemblage et qui sont généralement de l'ordre de 0,5 à 2 W/cm², dans le cas où l'on met en oeuvre de l'hydrogène et de l'oxygène, nécessitent l'association de plusieurs de ces assemblages électrode -membrane-électrode pour obtenir, par exemple les 50 kW nécessaires à un véhicule électrique standard.

Autrement dit, il est nécessaire d'assembler un nombre important de ces assemblages, dont les surfaces élémentaires peuvent être de l'ordre de 20 x 20 cm², pour obtenir la puissance voulue, notamment dans le cas où la pile à combustible est mise en oeuvre dans un véhicule électrique.

Dans ce but, chaque ensemble formé de deux électrodes et d'une membrane, définissant une cellule élémentaire de la pile à combustible, est ainsi disposé entre deux plaques étanches qui, d'une part, assurent la distribution de l'hydrogène, côté anode et, d'autre part, de l'oxygène côté cathode. Ces plaques sont appelées des plaques bipolaires.

La membrane conductrice ionique est généralement une membrane organique contenant des groupes ioniques qui, en présence d'eau, permettent la conduction des protons produits à l'anode par oxydation de l'hydrogène.

L'épaisseur de cette membrane est comprise en général entre 50 et 150 µm et résulte d'un compromis entre la tenue mécanique et la chute ohmique. Cette membrane permet également la séparation des gaz. La résistance chimique et électrochimique de ces membranes permet, en général, un fonctionnement en pile sur des durées supérieures à 1 000 heures.

Le polymère constituant la membrane doit donc remplir un certain nombre de conditions relatives à ses propriétés mécaniques, physico-chimiques et électriques qui sont, entre autres, celles définies ci-après.

Le polymère doit tout d'abord pouvoir donner des films minces, de 50 à 100 micromètres, denses, sans défauts. Les propriétés mécaniques, module élastique, contrainte à la rupture, ductilité, doivent le rendre compatible avec les opérations d'assemblage comprenant, par exemple, un serrage entre des cadres métalliques.

Les propriétés doivent être préservées en passant de l'état sec à l'état humide.

Le polymère doit avoir une bonne stabilité thermique à l'hydrolyse et présenter une bonne résistance à la réduction et à l'oxydation jusqu'à des températures voisines de 200°C. Cette stabilité thermomécanique s'apprécie en terme de variation de résistance ionique, et en terme de variation des propriétés mécaniques.

Le polymère doit enfin posséder une forte conductivité ionique, cette conductivité est apportée par des groupements acides forts, tels que des groupements acides phosphoriques, mais surtout sulfoniques reliés à la chaîne du polymère. De ce fait, ces polymères seront généralement définis par leur masse équivalente, c'est-à-dire par le poids de polymère en gramme par équivalent acide.

A titre d'exemple, les meilleurs systèmes développés actuellement sont capables de fournir une puissance spécifique de 1 W.cm⁻², soit une densité de courant de 2 A.cm⁻² pour 0,5 Volts.

Depuis plusieurs décennies, il a été proposé différents types de polymères conducteurs protoniques utilisables pour constituer des membranes de pile à combustible.

On a tout d'abord mis en oeuvre des résines de type phénolique sulfonées préparées par sulfonation de produits polycondensés, tels que les polymères phénol-formaldéhyde.

Les membranes préparées avec ces produits sont peu coûteuses, mais n'ont pas une stabilité à l'hydrogène suffisante à 50-60°C pour des applications de longue durée.

On s'est ensuite tourné vers les dérivés du polystyrène sulfoné qui présentent une stabilité supérieure à celle des résines phénoliques sulfonées, mais ne peuvent être utilisés à plus de 50-60°C.

Actuellement, les performances les plus intéressantes sont obtenues à partir de polymères constituées d'une chaîne principale linéaire perfluorée et d'une chaîne latérale portant un groupement acide sulfonique.

Parmi ces polymères les plus connus, et qui sont disponibles dans le commerce, on peut citer les polymères déposés sous les marques NAFION® de la société Dupont de Nemours, ACIPLEX® de la société Asahi Chemical, ou FLEMION® et DOW® de la société Dow Chemical.

Ces polymères présentent d'excellentes propriétés électrochimiques du fait de leur conductivité protonique élevée et une bonne stabilité chimique. Leurs propriétés sont stables jusqu'à 90-100°C environ pendant plusieurs milliers d'heures. Dans de telles conditions d'utilisation, les phénomènes de vieillissement sont peu marqués. En revanche, dans l'hypothèse d'une fabrication à très grande échelle, ces polymères ne sont pas adaptés, notamment pour l'industrie automobile, du fait de leur coût très élevé, de l'ordre de 800 euros/m².

Par ailleurs, la sensibilité aux alcools, appelée phénomène de cross-over et à des températures supérieures à 100 °C de ce type de polymères les exclut du champ d'application des piles directes au méthanol et fonctionnant à haute température, à savoir entre 100 et 150°C.

Afin d'abaisser les coûts, d'améliorer la stabilité chimique, d'augmenter les températures de fonctionnement et d'améliorer la durabilité des systèmes aux conditions de fonctionnement, de nombreuses études ont vu le jour depuis une dizaine d'années sur le développement d'électrolytes polymères solides possédant un squelette hydrogénocarboné. En effet, ces polymères à structure hydrogénocarbonée possèdent de nombreux atouts (bonne stabilité chimique, propriétés mécaniques intéressantes et propriétés thermiques élevées facilement modulables). Dans la plupart des cas, il s'agit de polymères commerciaux, tels que des polyéthercétones, des polyéthersulfones, des polybenzimidazoles, des polymères aromatiques tels que le polystyrène. Afin de leur conférer les propriétés attendues en terme notamment de conductivité protonique, ces polymères sont le plus souvent modifiés par « post-sulfonation » en utilisant des acides forts (acide sulfurique, acide sulfurique fumant, acide chlorosulfonique) ou par greffage par irradiation. Ce type de procédé de synthèse est simple et peu onéreux.

La demande internationale de brevet WO 94/24717 [1] illustre parfaitement cette démarche. Ces documents concernent d'une part, la synthèse de polyparaphénylènes substituées par réaction de couplage de type Colon et d'autre part, la postsulfonation de ces polymères pour la mise en oeuvre sous forme de membranes. Les polymères obtenus par les méthodes exposées dans ces documents sont stables jusqu'à 100 °C et possèdent des conductivités protoniques intéressantes. En revanche, aucune maîtrise de l'étape de postsulfonation n'est possible. En effet, d'une façon générale, cette méthode ne permet pas de contrôler le taux de fonctions sulfoniques introduites et leur répartition sur le squelette carboné initial. De ce fait, il est difficile de maîtriser à la fois la conductivité protonique, la stabilité chimique et thermique puis la sensibilité aux phénomènes de vieillissement en pile à combustible. De plus, on peut noter, dans certains cas, une dégradation non négligeable du squelette du polymère de base lié aux conditions de postsulfonation drastiques, telles que l'utilisation d'acides très forts et les températures élevées.

D'autres polymères à squelette hydrogénocarboné ont été décrits dans les documents US-A-5,668,245 [2] et EP-A-0 723 248 [3]. Ces polymères sont constitués d'un squelette comprenant des motifs répétitifs arylènes, tels que des motifs paraphénylènes- substitués par des groupes hétérocycliques sulfonées.

La préparation de ce type de polymères consiste à copolymériser un ou plusieurs monomères aromatiques non sulfonés avec un monomère porteur d'un groupement hétérocyclique sulfoné. La structure aromatique du squelette de ces polymères contribue à une bonne stabilité chimique desdits polymères. Les groupes hétérocycliques portés latéralement à certains endroits du squelette du polymère confèrent à ces polymères une solubilité élevée dans des solvants organiques tels que la N-méthylpyrrolidone, la N,N-diméthylformamide et peuvent donc être mis sous la forme de membranes. Ces groupes hétérocycliques sont de plus protonables par des acides classiques, ce qui confère une conductivité protonique intéressante. Toutefois, la liaison entre l'hétérocycle et l'acide est réversible et les propriétés de ce type de polymères ne sont pas stables sur une longue durée et dans les conditions de fonctionnement d'une pile à combustible.

La demande de brevet allemande DE-A1-195 35 086 [4] décrit des copolymères constitués de copolyphénylènes substitués par des groupes divers porteurs de fonctions sulfoniques. Deux méthodes de préparation sont proposées pour accéder à ce type de copolymères dans ce document.

Une première méthode consiste à effectuer une étape de postsulfonation de polymères constitués d'un squelette de type polyphénylène.

Une seconde méthode consiste à copolymériser des monomères classiques aromatiques avec des monomères porteurs de groupements sulfoniques. Cette méthode nécessite notamment l'utilisation d'une réaction de couplage de type Suzuki, en milieu aqueux et en présence de catalyseurs palladiés. Cette approche est relativement intéressante, car elle permet de contrôler facilement le taux de fonctions introduites dans les copolymères finaux et ainsi de maîtriser plus aisément les propriétés visées (morphologie, conductivité protonique et stabilité chimique et thermique). En revanche, la mise en oeuvre de cette technique est relativement coûteuse.

Il subsiste donc un besoin pour un polymère conducteur protonique, qui ne présente pas les inconvénients de l'art antérieur, qui présente une excellente stabilité chimique et thermique, qui présente des groupements ioniques dont le taux, la localisation et la répartition sont parfaitement contrôlés et qui satisfassent aux conditions suivantes :
- conductivité ionique (protonique) comprise entre 5.10⁻³ et 10⁻² S.cm⁻¹ ;
- résistance élevée aux phénomènes d'hydrolyse acide en milieu oxydant jusqu'à des températures voisines de 150°C ;
- résistance aux conditions de fonctionnement au sein du dispositif de pile à combustible ;
- faible perméation au méthanol, dans le cas d'une pile directe au méthanol ;
- stabilité thermomécanique jusqu'à des températures voisines de 200°C ;
- faible perméation aux gaz et notamment à l'hydrogène et à l'oxygène, pour les piles à hydrogène/air ;
- solubilité dans les solvants organiques usuels ;
- aptitude à être mis en oeuvre sous forme de film mince.

### EXPOSE DE L'INVENTION

L'ensemble de ces besoins est atteint, conformément à l'invention, par un polymère, dont le squelette est constitué d'au moins un motif phénylène répétitif de formule (I) suivante : 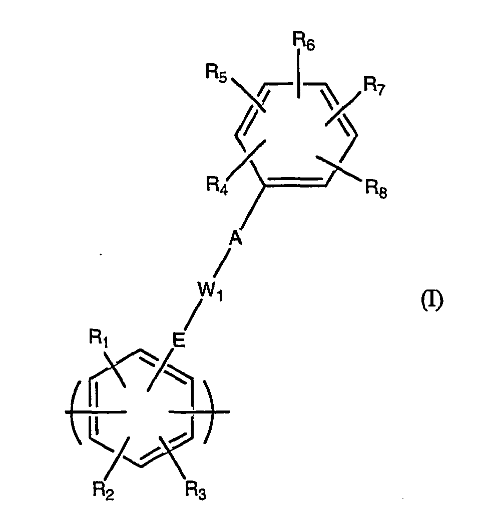 et d'au moins un motif phénylène répétitif de formule (II) suivante : 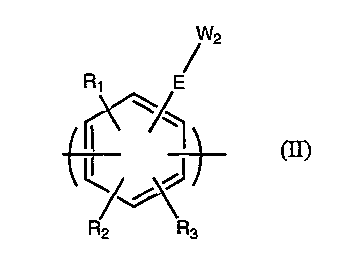 dans lesquelles :
- les groupes R₁, R₂, R₃, identiques ou différents, représentent un atome d'hydrogène, un atome d'halogène, un groupe alkyle, un groupe aryle, un groupe perfluoroalkyle ou un groupe perfluroaryle;
- le groupe E représente une liaison simple ou un groupe choisi parmi -(C=O)-, -P(=O)-, -SO₂- ;
- le groupe W₁ représente un groupe arylène, un groupe perfluoroarylène ;
- le groupe A représente un groupe choisi parmi -O-,
- S-, -NH-, -NR₉-, R₉ étant un groupe alkyle ;
- le groupe W₂ représente un groupe aryle substitué par au moins un substituant choisi parmi F, -O-SO₂-Aryle,
- S(=O)-Aryle ou représente un groupe perfluoroaryle ;
- les groupes R₄, R₅, R₆, R₇, R₈, identiques ou différents, représentent un groupe choisi parmi :
   - un atome d'hydrogène, un atome d'halogène, un groupe -OH, un groupe
   - M(R₁₀)₃ avec R₁₀ représentant un groupe alkyle et M un métal choisi parmi Si, Sn, Ge ;
   - un groupe -P(=O)(OR₁₁)₂ avec R₁₁ représentant un groupe alkyle ;
   - un groupe aryle, un groupe O-Aryle, un groupe -SO₂-aryle, un groupe alkylaryle, un groupe perfluoroalkyle, un groupe perfluoroalkylearyle, lesdits groupes alkyle, perfluoroalkyle, perfluoroalkylearyle comportant éventuellement dans leurs chaîne un ou plusieurs atomes d'oxygène, d'azote et/ou soufre ;
   - un groupe perfluoroaryle, un groupe -O- aryle perfluoré, lesdits groupes perfluoroalkyle, perfluoroaryle, perfluoroalkylearyle, -O-aryle perfluoré étant éventuellement porteur d'un groupe choisi parmi -SO₃H, -PO₃H₂, -CO₂H ;
   - un groupe -SO₃H, un groupe -PO₃H₂, un groupe -CO₂H ;
   à condition que l'un au moins des groupes R₄, R₅, R₆, R₇, R₈ représente un groupe choisi parmi les groupes - SO₃H, -PO₃H₂, -CO₂H, les groupes perfluoroalkyles, les groupes perfluoroalkylaryles comportant éventuellement dans leur chaîne un ou plusieurs atomes d'oxygène, d'azote et/ou de soufre, les groupes perfluoroaryles, les groupes -O-aryle perfluoré, ces groupes perfluoro étant porteurs d'un groupe choisi parmi -SO₃H, -PO₃H₂, -CO₂H,
   lesdits groupes SO₃H, -PO₃H₂, -CO₂H pouvant être sous forme de sels de métal alcalin.

Avant d'entrer plus en détail dans la description, nous proposons les définitions suivantes.

Par atome d'halogène, on entend, selon l'invention un atome choisi parmi le fluor, le chlore, le brome et l'iode.

Par groupe alkyle, on entend, selon l'invention dans ce qui précède et ce qui suit, un groupe alkyle linéaire ou ramifié de 1 à 20 atomes de carbone, un groupe cyclique de 3 à 20 atomes de carbones. On peut citer parmi ces groupes le groupe méthyle, éthyle, n-propyle, i-propyle, n-butyle, n-dodécanyle, i-butyle, t-butyle, cyclopropyle, cyclohexyle. Ces groupes peuvent comprendre dans leur chaîne un ou plusieurs groupes choisis parmi O, S et/ou N.

Par groupe aryle, on entend, selon l'invention dans ce qui précède et ce qui suit, un groupe carboné aromatique comprenant de 6 à 20 atomes de carbone. On peut citer, parmi ces groupes, le groupe benzyle, naphtyle, tolyle, biphényle.

Par groupe arylène, on entend un groupe aryle (tel que défini précédemment) formant pont entre deux groupements, c'est-à-dire dont deux hydrogènes sont substitués pour former ledit pont.

Par groupe alkylaryle, on entend, selon l'invention dans ce qui précède et ce qui suit, un groupe aryle de même définition que celle donnée précédemment, ledit groupe étant substitué par au moins une chaîne alkyle, pouvant comporter un ou plusieurs atomes d'O, de N et/ou S.

Par groupe -O-aryle et -SO₂-aryle, on entend un groupe aryle, de même définition que celle donnée précédemment, les groupes aryle étant dans ce cas reliés dans ce cas à d'autres groupes par un atome d'oxygène ou un groupe sulfonyl -SO₂-.

Par groupe perfluoroalkyle, perfluoraryle, -O-aryle perfluoré, perfluoroalkylaryle, perfluoroarylène on entend des groupes dont les atomes d'hydrogène sont totalement substitués par des atomes de fluor (les alkyles, aryles, alkylènes, arylènes répondant à la même définition que celle donnée précédemment). Par exemple, on peut citer le trifluorométhyl -CF₃, le perfluoroéthyle, le perfluorobutyle, le perfluoropropyle, le perfluoropentyle, le perfluorophényl C₆F₅-, le perfluorobiphényle, le perfluorobenzyle.

Par sel de métal alcalin, on entend des sels répondant aux formules -SO₃Y, -PO₃Y₂, -CO₂Y avec Y étant un métal choisi parmi Na, K, Li.

Par liaison simple, on entend une liaison covalente simple formant un pont entre le groupe phényle porteur de R₁, R₂, R₃ et le groupe W₁ ou W₂ selon le motif phénylène considéré.

Le polymère, selon l'invention, est un copolymère pouvant être constitué d'un ou plusieurs motifs répétitifs de formule (I) et d'un ou plusieurs motifs répétitifs de formule (II).

Le polymère, conforme à l'invention, du fait qu'il possède un squelette constitué de ces motifs phénylène, possède les qualités physiques, chimiques, mécaniques et thermiques inhérentes à ce genre de structure.

Grâce à la présence de groupements acides - SO₃H, -PO₃H₂, ou -CO₂H et à l'association de motifs de formule (I) et (II), ces polymères présentent une bonne conductivité protonique et une bonne capacité d'échange ionique, cette capacité pouvant être supérieure à 1 méq/g, de préférence de 1,2 à 1,7 méq/g. De plus, ces polymères présentent une excellente faculté à être mis sous forme de films minces. Toutes ces caractéristiques susmentionnées contribuent à rendre ces polymères particulièrement intéressants pour être incorporés dans la constitution des membranes.

De plus, le fait que le squelette du polymère soit constituée d'au moins un motif répétitif phénylène conforme à formule (I) et d'au moins un motif répétitif de formule (II) contribue à diminuer le pKa de ces polymères par rapport à des polymères classiques de l'art antérieur (la diminution de pKa contribuant à augmenter l'acidité des fonctions-SO₃H, -PO₃H₂, ou -CO₂H). Ces polymères peuvent être employés comme membranes dans des dispositifs de pile à combustible fonctionnant à température élevée.

Le poids moléculaire du polymère, selon l'invention, est généralement supérieur ou égal à 50 000, de préférence de 50 000 à 150 000.

Le polymère, conforme à l'invention, peut être un polymère statistique, alterné ou séquentiel. Pour chacune de ses possibilités, le pourcentage molaire de chacun des motifs répétitifs peut varier tout en étant parfaitement définis.

Ainsi, le polymère selon l'invention, pourra comprendre de 40 à 50 % en mole du ou des motifs répétitifs (I) et de 60 à 50 % en mole du ou des motifs répétitifs (II).

Selon l'invention, les groupes phénylènes constituant le squelette du polymère pouvant être, les uns par rapport aux autres, dans la forme ortho (1,2-phénylène), méta (1,3-phénylène) ou para (1,4-phénylène).

De préférence, les groupes phénylènes du squelette sont en position para, les uns par rapport aux autres, c'est à dire que ces motifs répondent aux formules suivantes :

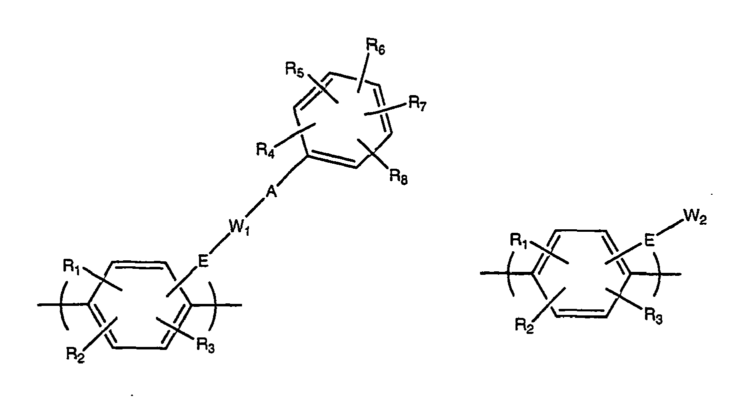

Selon l'invention, les groupes E et A portés par W₁ peuvent être en position ortho, méta et para les uns par rapport aux autres.

Les groupes R₁, R₂, R₃, portés par les phénylènes des motifs de formules (I) et (II) qui peuvent être identiques ou différents, représentent un atome d'hydrogène, un atome d'halogène, un groupe alkyle, un groupe aryle, un groupe perfluoroalkyle ou un groupe perfluoroaryle.

Le groupe W₁ faisant jonction entre les phénylènes du motif de formule (I) formant le squelette du polymère et le phénylène porté latéralement peut être un groupe arylène, un groupe perfluoroarylène.

Les groupes R₄, R₅, R₆, R₇, R₈, identiques ou différents, représentent un groupe choisi parmi :
- un atome d'hydrogène, un atome d'halogène, un groupe -OH, un groupe -M(R₁₀)₃ avec R₁₀ représentant un groupe alkyle et M un métal choisi parmi Si, Sn, Ge ;
- un groupe -P(=O)(OR₁₁)₂ avec R₁₁ représentant un groupe alkyle ;
- un groupe aryle, un groupe 0-Aryle, un groupe -SO₂-aryle, un groupe alkylaryle, un groupe perfluoroalkyle, un groupe perfluoroalkylearyle, lesdits groupes alkyle, perfluoroalkyle, perfluoroalkylearyle comportant éventuellement dans leurs chaîne un ou plusieurs atomes d'oxygène, d'azote et/ou soufre ;
- un groupe perfluoroaryle, un groupe -O- aryle perfluoré, lesdits groupes perfluoroalkyle, perfluoroaryle, perfluoroalkylearyle, -O-aryle perfluoré étant éventuellement porteur d'un groupe choisi parmi -SO₃H, -PO₃H₂, -CO₂H ;
- un groupe -SO₃H, un groupe -PO₃H₂, un groupe -CO₂H ;
à condition que l'un au moins des groupes R₄, R₅, R₆, R₇, R₈ représente un groupe choisi parmi les groupes - SO₃H, -PO₃H₂, -CO₂H, les groupes perfluoroalkyles, les groupes perfluoroalkylaryles comportant éventuellement dans leur chaîne un ou plusieurs atomes d'oxygène, d'azote et/ou de soufre, les groupes perfluoroaryles, les groupes -0-aryle perfluoré, ces groupes perfluoro étant porteurs d'un groupe choisi parmi -SO₃H, -PO₃H₂, -CO₂H,
lesdits groupes SO₃H, -PO₃H₂, -CO₂H pouvant être sous forme de sels de métal alcalin.

Ainsi, l'un au moins des R₄, R₅, R₆, R₇, R₈ doit représenter un groupe -SO₃H, -PO₃H₂, ou -CO₂H porté directement sur le cycle ou l'un au moins des R₄, R₅, R₆, R₇, R₈ doit représenter un groupe perfluoroalkyle, perfluoroalkylaryle (le groupe perfluoroalkyle et le groupe perfluoroalkylaryle pouvant comporter dans leur chaîne un ou plusieurs atomes d'oxygène, d'azote et/ou de soufre), perfluoroaryle, ou -O-aryle perfluoré porté directement sur le cycle, ces groupes perfluoro (c'est-à-dire les groupes perfluoroalkyle, perfluoroalkylaryle, perfluoroaryle ou O-aryle perfluoré) portant un groupe choisi parmi -SO₃H, -PO₃H₂, ou -CO₂H.

De préférence, l'un au moins des groupes R₄, R₅, R₆, R₇, R₈ représente un groupe perfluroalkyle, comportant dans sa chaîne un ou plusieurs atomes d'oxygène, d'azote et/ou soufre, ledit groupe étant porteur d'un groupe choisi parmi -SO₃H, -PO₃H₂, -CO₂H ou les sels de métal alcalin.

Ainsi, grâce à ce mode préférentiel, on accède à des polymère présentant des pKa très faibles (pouvant avoir des valeurs négatives) ce qui renforce la capacité de ces polymères à conduire les protons.

Dans le motif de formule (II), le groupe W₂ représente un groupe aryle substitué par au moins un substituant choisi parmi F, -O-SO₂-Aryle, -S(=O)-Aryle ou représente un groupe perfluoroaryle

A titre d'exemple, on peut citer comme W₂ le groupe de formule suivante :

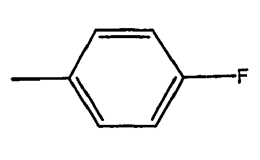

On note que peuvent coexister, dans les polymères selon l'invention, différents motifs répétitifs de formule (I) ainsi que différents motifs répétitifs de formule (II), dont on pourra régler la proportion.

Une famille particulière, conforme à la présente invention, correspond à une famille de polymères dans laquelle, pour le ou les motifs répétitifs de formule (I), l'un au moins des R₄, R₅, R₆, R₇, R₈, représente un groupe choisi parmi -SO₃H, -PO₃H₂, -CO₂H et pour le ou les motifs de formule (II), W₂ est un groupe aryle porteur d'un substituant fluor.

Des polymères particuliers appartenant à la famille définie ci-dessus sont ceux, par exemple, dont le squelette est constitué de motifs conformes aux formule (I) et (II) ci-dessus, répondant aux formules (Ia) et (IIa) suivantes :

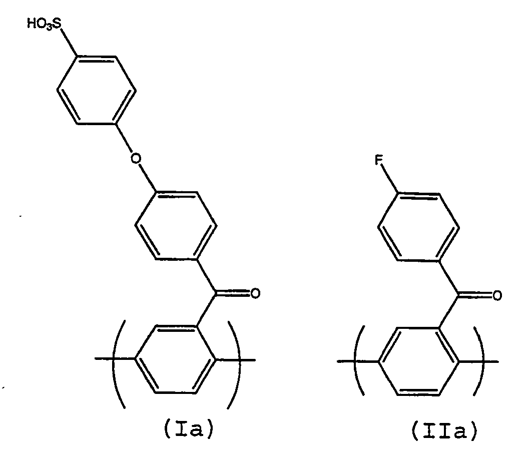

Une autre famille, conforme à la présente invention, correspond à une famille, dans laquelle, pour les motifs de formule (I), l'un au moins des R₄, R₅, R₆, R₇, R₈ représente un groupe perfluoroalkyle choisi parmi les groupes de formules suivantes :
- (CF₂)ₙ-O- (CF₂)ₙ-SO₃H, -(CF₂)ₙ-SO₃H, -O-(CF₂)ₙ-SO₃H, -O-(CF₂)ₙ-O-(CF₂)ₙ, n allant de 1 à 10 et pour les motifs de formule (II) W₂ représente un groupe aryle porteur d'un atome de fluor.

Des polymères particuliers appartenant à la famille définie ci-dessus sont ceux, par exemple, dont le squelette est constitué de motifs conformes aux formules (I) et (II), répondant aux formules (Ib) et (IIa) suivantes :

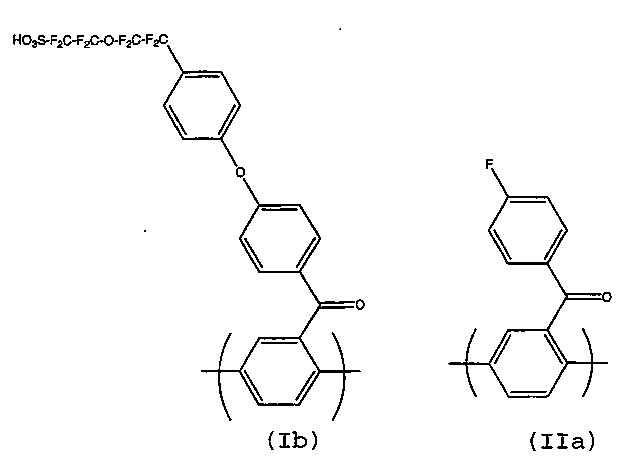

Cette famille de polymère est particulièrement avantageuse du fait notamment, que le groupe acide est portée par une chaîne perfluoroalkyle, ce qui contribue à diminuer encore davantage le pKa par rapport à la famille décrite précédemment et ainsi à augmenter leur conductivité ionique.

Les polymères conformes à la présente invention peuvent être préparés par tout type de procédé connu de l'homme du métier.

En particulier, les polymères conformes à la présente invention peuvent être préparés par un procédé comprenant la réaction d'un polymère de base dont le squelette est constitué d'au moins un motif répétitif de formule (II) suivante : 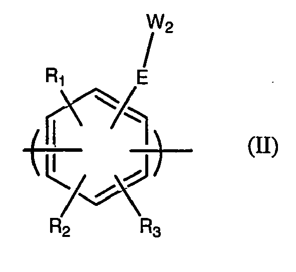 dans laquelle les R¹, R², R³, W₂ et E répondent à la même définition que celle donnée ci-dessus,
avec au moins un composé de formule (III) suivante : 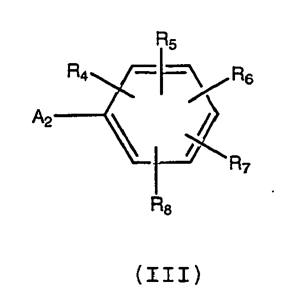 dans laquelle les R₄, R₅, R₆, R₇ et R₈ sont tels que définis précédemment, le groupe A₂ est un groupe OH, NH₂, NHR, SH apte à assurer la substitution nucléophile d'un groupe porté par W₂, ce groupe pouvant être un groupe F, -O-SO₂-Aryle ou -S(=O)-Aryle. On note que R répond à la même définition que R₉ donnée ci-dessus.

On note que, selon l'invention, la réaction du composé de formule (III) (de préférence sous forme de sel alcalin de -SO₃H, -PO₃H₂, ou -CO₂H) sur le motif de formule (II) permet d'obtenir un motif de formule (I). Le polymère obtenu à l'issue de cette réaction (de préférence non totale pour des raisons stériques) comportera à la fois un ou plusieurs motifs de formule (I) et un ou plusieurs motifs de formule (II) (issu des motifs du polymère de base n'ayant pas réagi). Le polymère comportera différents motifs de formule (I), lorsque :
- le polymère de base est constitué de différents motifs de formule (II) et/ou ;
- la réaction est réalisée avec différents composés de formule (III).

Pour ce procédé, on part d'un polyphénylène fonctionnalisé, comme produit de départ, comprenant un groupement (porté ici par W₂) apte à être substitué par un groupement nucléophile lors d'une substitution nucléophile, ce groupement apte à être substitué pouvant être un groupe F, -SO₂-aryle, -SO-Aryle.

Ce procédé est particulièrement avantageux car il permet de contrôler le taux de substitution du polymère de base par les composés de formule (III), et par conséquent le taux d'introduction des fonctions de type -SO₃H, PO₃H₂, CO₂H (ou sous forme de sel alcalin) et permet d'introduire différents types de motifs de formule (I). De plus, ce procédé est facile à mettre en oeuvre.

Les composés (III) peuvent être directememt disponibles commercialement ou indirectement sous forme d'intermédiaire, par exemple des intermédiaires -SO₂F, nécessitant ainsi d'être traité par un traitement préalable d'hydrolyse acide.

Les polymères de base utilisés dans le cadre de ce procédé peuvent être des polymères commerciaux ou encore des polymères synthétisés pour la réaction.

De tels polymères peuvent être obtenus à partir de monomères de formule : 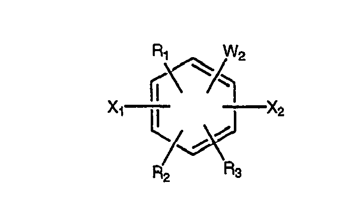 X₁ et X₂, représentant, de préférence, des atomes d'halogène, de préférence, du chlore, du brome, des sulfonates tels que les mésylates -O-SO₂-CH₃. Ces monomères peuvent être polymérisés de préférence à l'aide d'un mélange catalytique d'un sel de nickel anhydre, de préférence un halogénure, tel que NiCl₂, et de triphénylphosphine en présence d'un métal réducteur choisi de préférence parmi Zn, Mg et Mn. De préférence, on peut utiliser de la bipyridine comme amorceur et un solvant polaire aprotique tel que la N-méthylpyrrolidone, le diméthylformamide, le diméthylsulfoxyde.

A titre d'exemple, un polymère servant de polymère de base pour réaliser un polymère de l'invention est le poly(4'-fluoro-2,5-benzophénone). Dans le cas de ce polymère, une étape d'oxydation supplémentaire peut être prévue.

Ce polymère peut être préparé selon le schéma réactionnel suivant : 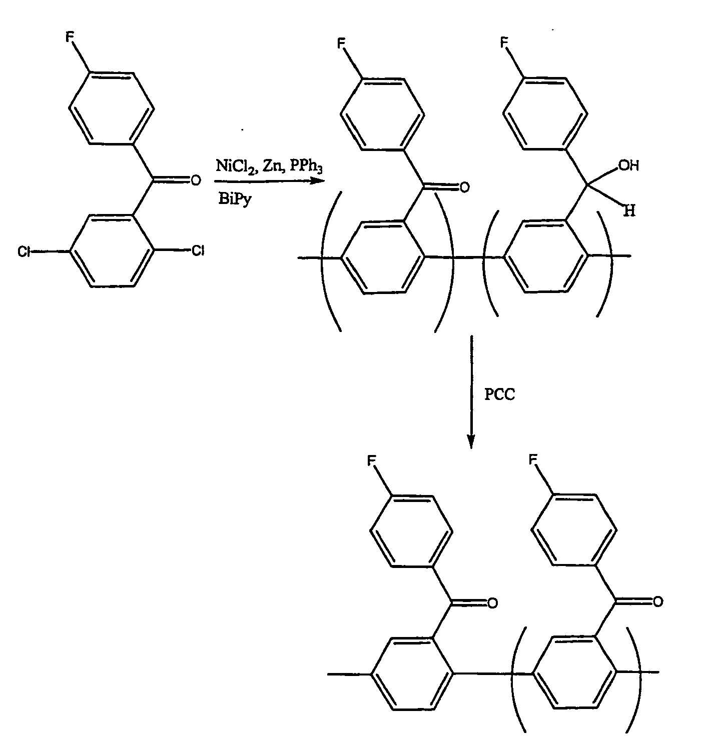 PCC correspondant à l'oxydant chloroformiate de pyridinium.

Ces procédés d'obtention de polymères de base sont décrits notamment dans le document « Coupling of Aryl Chlorides by Nickel and Reducing metals » de I.Colon et D.R. Kelsey, I.Org.Chem., 1986, 51, p.2627-2637 [5], auquel on pourra se reporter.

Ensuite, le polymère de base, comportant sur chacune de ses unités répétitives un substituant, par exemple, du type fluor subit une réaction de substitution nucléophile aromatique par au moins un composé adéquat de formule (III) comprenant les R₄, R₅, R₆, R₇ et R₈ adéquats et ledit groupe A₂.

Du fait que le groupe substituable porté sur le cycle aromatique constitutif de W₂ soit choisi en fonction de son aptitude à être facilement substitué, la réaction de substitution aromatique peut être réalisée dans des conditions de synthèse très douces en milieu polaire aprotique. Ce procédé de préparation permet également un parfait contrôle de la position et de la répartition de la molécule organique greffée sur le polymère de base.

De manière détaillée, on commence généralement par purifier l'ensemble des réactifs mis en jeu dans la réaction afin d'éliminer toutes traces d'impuretés susceptibles de modifier la nature du polymère obtenu.

La réaction est réalisée dans des récipients sous atmosphère inerte, par exemple un réacteur équipé d'un balayage d'argon, équipé éventuellement d'un Dean-Starck, ledit Dean-Starck permettant l'élimination de l'eau formée lors de la formation de l'anion du composé (III).

Dans un premier temps, on peut commencer, par introduire dans le réacteur sous argon, une base douce, telle du carbonate de sodium, suivi d'un solvant aprotique ou mélange de solvants aprotiques, telle qu'un mélange de diméthylacétamide et de toluène.

On peut introduire ensuite le composé de formule (III) suivi d'un chauffage à une température allant de 100 à 145 °C pendant une durée de 1 à 4 heures. Ensuite on introduit le polymère comprenant un motif répétitif de formule (II) et on porte le mélange réactionnel à une température de 100 à 150°C pendant une durée, par exemple de 24 heures.

Le mélange réactionnel est ensuite précipité par ajout d'eau distillée puis laissé sous agitation. Le précipité de polymère obtenu est alors séparé, par exemple, par filtration sur Büchner.

En ajustant les conditions opératoires exposées ci-dessus, le procédé selon l'invention peut conduire à la formation d'un polymère statistique, séquentiel ou alterné.

Du fait des capacités d'échange ionique et la stabilité chimique des polymères de l'invention et également de leur solubilité dans des solvants organiques tels que la N-méthylpyrrolidone, le diméthylformamide, le diméthylsulfoxyde, le diméthylacétamide, ces polymères présentent toutes les propriétés pour être mis sous la forme de membranes. En effet, les polymères de la présente invention ont une capacité d'échange d'ions élevée, une conductivité ionique (protonique) entre 5.10⁻³ et 10⁻² S.cm⁻¹.

L'invention a donc également pour objet une membrane comprenant au moins un polymère selon l'invention.

Les membranes selon l'invention peuvent être préparées par tout type de méthodes connues de l'homme du métier.

En particulier, ces membranes peuvent être préparées, par exemple, par coulée du polymère mis en préalablement en solution dans un solvant tel que la N-méthylpyrrolidone, le diméthylformamide, le diméthylsulfoxyde, le diméthylacétamide, sur une plaque, puis le polymère déposé est séché de façon à obtenir un film d'épaisseur de 50 à 100 µm puis décollé de la plaque.

Les membranes selon l'invention, du fait du polymère dont elles sont constituées, présentent une résistance élevée aux phénomènes d'hydrolyse acide en milieu oxydant jusqu'à des températures voisines de 150°C, une stabilité thermomécanique jusqu'à des températures voisines de 200°C, une faible perméation au méthanol, aux gaz, en particulier à l'hydrogène et à l'oxygène.

Toutes ces conditions sont celles entrant en jeu dans le fonctionnement d'une pile à combustible, et notamment des piles à hydrogène/air ou méthanol/air fonctionnant à haute température.

Ainsi, l'invention a également pour objet un dispositif de pile à combustible comprenant au moins une membrane comprenant un polymère selon l'invention.

Ce dispositif comprend un ou plusieurs assemblages électrode-membrane-électrode.

Pour préparer un tel assemblage, la membrane peut être placée entre deux électrodes, par exemple, en tissu de carbone imprégné d'un catalyseur. L'ensemble est ensuite pressé à une température adéquate afin d'obtenir une bonne adhésion électrode-membrane.

L'assemblage électrode-membrane-électrode obtenu est ensuite placé entre deux plaques, assurant la conduction électrique et l'alimentation en réactifs aux électrodes. Ces plaques sont communément désignées sous le terme de plaques bipolaires.

L'invention va maintenant être décrite en référence aux exemples suivants, donnés à titre illustratif et non limitatif.

### EXEMPLE 1.

Synthèse d'un polymère perfluoré sulfoné à partir du poly(4'-fluoro-2,5-benzophénone) et du sel de sodium de l'acide 4-hydroxybenzène sulfonique (40 % de substitution).

Le polymère initial poly(4'-fluoro-2,5-benzophénone) est préparé selon une méthode inspirée de la publication de A.J Pasquale et coll « Poly(p-phenylene)derivatives via Ni-catalyzed Coupling of Aromatic Dichlorides », Polymer Preprints, 1997, 38(1) 17 [6] et de P.Bloom et coll « Functional Derivatives of Poly(4'-fluoro-2,5-diphénylsulfone) via nucleophilic aromatic substitution », Polymer Preprints, ACS, 1999, 40 (2) 567 [7]. Ce polymère est constitué d'un enchaînement de motifs :

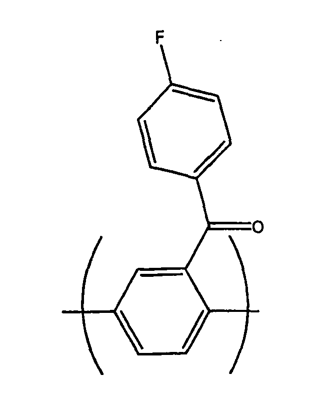

Le sel de sodium de l'acide 4-hydroxybenzène sulfonique correspondant à la formule suivante : 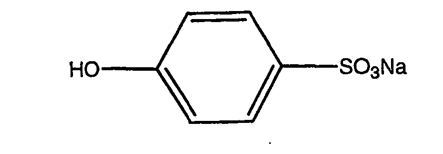 est utilisé comme précurseur pour fonctionnaliser le polymère, dont la structure est décrite ci-dessus. Le but de cet exemple est d'obtenir un copolymère comportant 40% de ce précurseur arylsulfoné.

Dans un tricol de 100 mL, muni d'un Dean-Stark, d'un réfrigérant, d'une entrée d'argon et d'une agitation magnétique, préalablement séché sous argon et placé sous courant d'argon, on ajoute successivement le carbonate de potassium en léger excès, puis 3 mL de diméthylacétamide et 30 mL de toluène à l'aide d'une seringue. Le flux d'argon est maintenu pendant toute la réaction. On introduit 0,2 g du sel de sodium de l'acide 4-hydroxybenzène sulfonique et on place ce mélange dans un bain d'huile, préchauffé à 130 °C, pendant 2 heures. On introduit ensuite 0,2 g de polymère dissous dans 3 mL de diméthylacétamide. On porte le bain d'huile entre 100 et 145°C pendant environ 24 heures. On précipite le polymère dans 150 mL d'eau distillée. On laisse agiter pendant une nuit à température ambiante avant de filtrer sur Büchner. Le rendement est de 75%. La structure du copolymère perfluoré sulfoné est contrôlée en Infra-Rouge, RMN, DSC, ATG et analyse élémentaire.

A l'issue de cette préparation, on obtient un polymère constitué d'un motif répétitif (Ia) et d'un motif répétitif (IIa).

La capacité d'échange ionique du copolymère obtenu est égale à 1,5 meq H⁺/g et le pKa=2.

### EXEMPLE 2.

Synthèse d'un polymère perfluoré sulfoné à partir du poly(4'-fluoro-2,5-benzophénone) et du sel de sodium de l'acide 4-hydroxybenzène sulfonique (50 % de substitution).

On utilise le même polymère initial que dans l'exemple 1 ainsi que le même mode opératoire. 0,3 g du sel de sodium de l'acide 4-hydroxybenzène sulfonique est ajouté pour obtenir un copolymère comportant 50 % de ce précurseur arylsulfoné. Le rendement est de 76 %. La structure du copolymère perfluoré sulfoné est contrôlée en IRTF, RMN, DSC, ATG et analyse élémentaire.

A l'issue de cette préparation, on obtient un polymère constitué d'un motif répétitif (Ia) et d'un motif répétitif (IIa).

La capacité d'échange ionique du copolymère obtenu est égale à 1,7 meq H⁺/g et le pKa=2,3.

### EXEMPLE 3.

Synthèse d'un polymère perfluoré sulfoné à partir du poly(4'-fluoro-2,5-benzophénone) et du sel de sodium de l'acide tétrafluoro-2-(tétrafluoro-2-(4-hydroxyphénoxy)éthoxy)tétrafluoroéthanesulfonique (40 % de substitution).

On utilise le même polymère initial que dans l'exemple 1 ainsi que le même mode opératoire. Dans ce cas, 0,5 g du sel de sodium de l'acide tétrafluoro-2-(tétrafluoro-2-(4-hydroxyphénoxy)éthoxy)tëtrafluoroéthanesulfonique est ajouté pour obtenir le copolymère visé comportant 40% de ce précurseur arylsulfoné dont la structure est décrite ci-dessous :

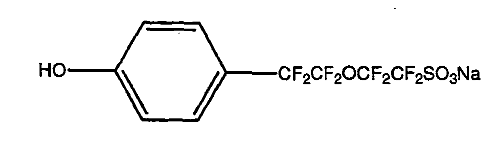

Le rendement est de 60 %. La structure du copolymère perfluoré sulfoné est contrôlée en IRTF, RMN, DSC, ATG et analyse élémentaire.

A l'issue de cette préparation, on obtient un polymère constitué d'un motif répétitif (Ib) et d'un motif répétitif (IIa).

La capacité d'échange ionique du copolymère obtenu est égale à 1,25 meq H⁺/g et le pKa=-3.

### EXEMPLE 4.

On utilise le même polymère initial que dans l'exemple 1 ainsi que le même mode opératoire. Dans ce cas, 0,7 g du sel de sodium de l'acide tétrafluoro-2-(tétrafluoro-2-(4-hydroxyphénoxy)éthoxy)tétrafluoroéthanesulfonique est ajouté pour obtenir le copolymère visé comportant 80% de ce précurseur arylsulfoné dont la structure est décrite ci-dessous :

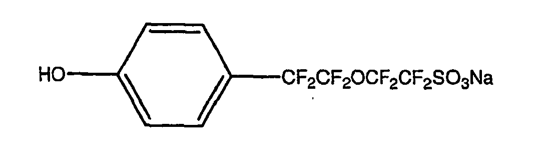

Le rendement est de 50 %. La structure du copolymère perfluoré sulfoné est contrôlée en IRTF, RMN, DSC, ATG et analyse élémentaire.
A l'issue de cette préparation, on obtient un polymère constitué d'un motif répétitif (Ib) et d'un motif répétitif (IIa) .

La capacité d'échange ionique du copolymère obtenu est égale à 1,2 meq H⁺/g et le pKa=-3,5.

### Références citées.

[1] WO 94/24717 ;
[2] US-A-5 668 245 ;
[3] EP-A-0 723 248 ;
[4] DE-A1-195 35 086 ;
[5] I.Colon et D.R. Kelsey, I.Org.Chem., 1986, 51, p.2627-2637 ;
**[6]** A.J Pasquale et coll, Polymer Preprints, 1997, 38 (1) 17 ;
**[7]** P.Bloom et coll, Polymer Preprints, ACS, 1999, 40 (2) 567.

## Revendications

1. Polymère, dont le squelette est constitué d'au moins un motif phénylène répétitif de formule (I) suivante : 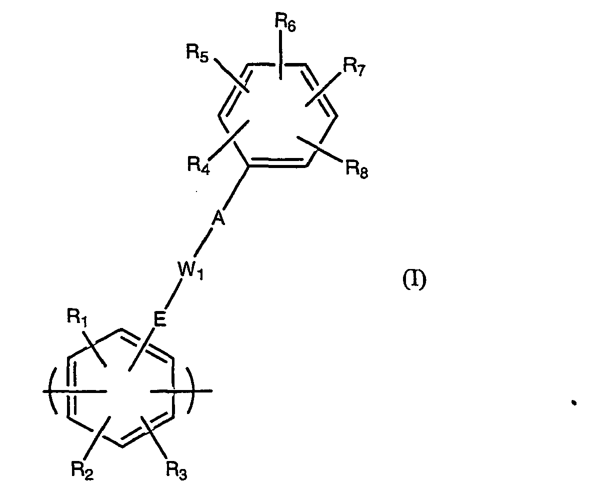 et d'au moins un motif phénylène répétitif de formule (II) suivante : 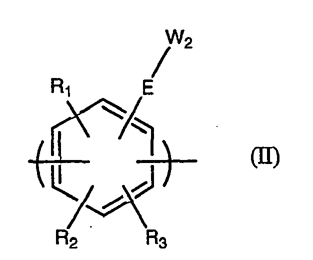 dans lesquelles :
- les groupes R₁, R₂, R₃, identiques ou différents, représentent un atome d'hydrogène, un atome d'halogène, un groupe alkyle pouvant comprendre dans sa chaîne un ou, plusieurs groupes choisis parmi 0,5 et/ou N. un groupe aryle, un groupe perfluoroalkyle ou un groupe perfluroaryle;
- le groupe E représente une liaison simple ou un groupe choisi parmi - (C=0) -, -P (=O) -, -SO₂- ;
- le groupe W₁ représente un groupe arylène, un groupe perfluoroarylène ;
- le groupe A représente un groupe choisi parmi -O-,
- S-, -NH-, -NR₉-, R₉ étant un groupe alkyle ;
- le groupe W₂ représente un groupe aryle substitué par au moins un substituant choisi parmi F, -O-SO₂-Aryle,
- S(=O)-Aryle ou représente un groupe perfluoroaryle ;
- les groupes R₄, R₅, R₆, R₇, R₈, identiques ou différents, représentent un groupe choisi parmi :
- un atome d'hydrogène, un atome d'halogène, un groupe -OH, un groupe
- M(R₁₀)₃ avec R₁₀ représentant un groupe alkyle et M un métal choisi parmi Si, Sn, Ge ;
- un groupe -P(=O)(OR₁₁)₂ avec R₁₁ représentant un groupe alkyle ;
- un groupe aryle, un groupe O-Aryle, un groupe -SO₂-aryle, un groupe alkylaryle, un groupe perfluoroalkyle, un groupe perfluoroalkylearyle, lesdits groupes alkyle, perfluoroalkyle, perfluoroalkylearyle comportant éventuellement dans leurs chaîne un ou plusieurs atomes d'oxygène, d'azote et/ou soufre ;
- un groupe perfluoroaryle, un groupe -O- aryle perfluoré, lesdits groupes perfluoroalkyle, perfluoroaryle, perfluoroalkylearyle, -O-aryle perfluoré étant éventuellement porteur d'un groupe choisi parmi -SO₃H, -PO₃H₂, -CO₂H ;
- un groupe -SO₃H, un groupe -PO₃H₂, un groupe -CO₂H ;
à condition que l'un au moins des groupes R₄, R₅, R₆, R₇, R₈ représente un groupe choisi parmi les groupes -SO₃H, PO₃H₂, -CO₂H, les groupes perfluoroalkyles, les groupes perfluoroalkylaryles comportant éventuellement dans leur chaîne un ou plusieurs atomes d'oxygène, d'azote et/ou de soufre, les groupes perfluoroaryles, les groupes -O-aryle perfluoré, ces groupes perfluoro étant porteurs d'un groupe choisi parmi -SO₃H, -PO₃H₂, -CO₂H,
lesdits groupes SO₃H, -PO₃H₂, -CO₂H pouvant être sous forme de sels de métal alcalin.

2. Polymère selon la revendication 1, dont le poids moléculaire est supérieur ou égal à 50 000, de préférence de 50 000 à 150 000.

3. Polymère selon la revendication 1 ou 2, dans lequel les groupes phénylène du squelette sont en position para les uns par rapport aux autres.

4. Polymère selon l'une quelconque des revendications précédentes, qui est un polymère statistique, alterné ou séquentiel.

5. Polymère selon l'une quelconque des revendications 1 à 4, comprenant de 40 à 50% en moles du ou des motifs répétitifs de formule (I) et de 60 à 50 % en moles du ou des motifs répétitifs de formule (II).

6. Polymère selon l'une quelconque des revendications 1 à 5, dans lequel l'un au moins l'un au moins des groupes R₄, R₅, R₆, R₇, R₈ représente un groupe perfluroalkyle, comportant dans sa chaîne un ou plusieurs atomes d'oxygène, d'azote et/ou soufre, ledit groupe étant porteur d'un groupe choisi parmi -SO₃H, - PO₃H₂, -CO₂H ou ses sels de métal alcalin.

7. Polymère selon l'une quelconque des revendications 1 à 5, dans lequel, pour le ou les motifs répétitifs de formule (I), l'un au moins des R₄, R₅, R₆, R₇, R₈ représente un groupe choisi parmi -SO₃H, - PO₃H₂, -CO₂H et pour le ou les motifs de formule (II), W₂ est un groupe aryle porteur d'un groupe partant fluor.

8. Polymère selon la revendication 7, dont le squelette est constitué de motifs répétitifs de formule (Ia) et (IIa) suivantes :

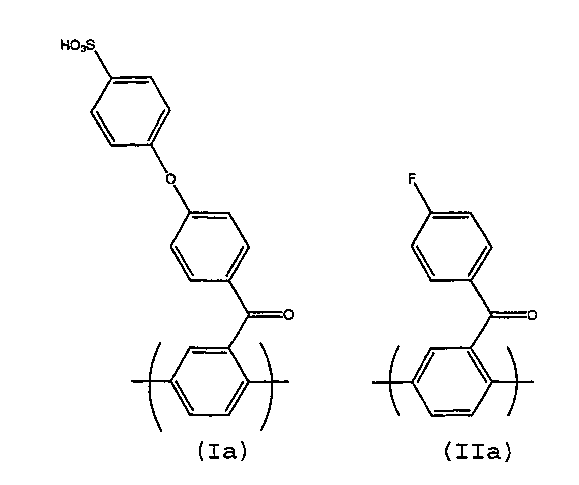

9. Polymère selon l'une quelconque des revendications 1 à 6, dans lequel, pour le ou les motifs répétitifs de formule (I), l'un au moins des R₄, R₅, R₆, R₇, R₈ représente un groupe perfluoroalkyle choisi parmi les groupes de formule suivante : - (CF₂)ₙ-O- (CF₂)ₙ-SO₃H, - (CF₂)ₙ-SO₃H, -O- (CF₂)ₙ-SO₃H, -O-(CF₂)ₙ-O-(CF₂)ₙ-SO₃H, n allant de 1 à 10 et pour le ou les motifs répétitifs de formule (II), W₂ représente un groupe aryle porteur d'un atome de fluor.

10. Polymère selon la revendication 9, dont le squelette est constitué de motifs répétitifs de formule (Ib) et (IIa) suivantes :

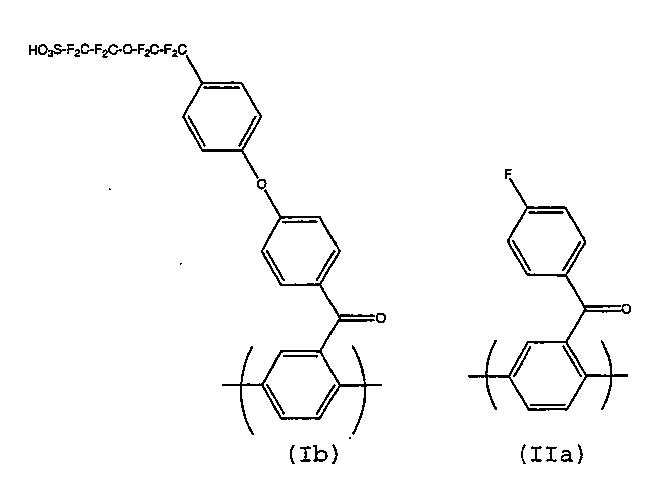

11. Procédé de préparation d'un polymère selon la revendication 1 ou 2, comprenant la réaction d'un polymère de base dont le squelette est constitué d'au moins un motif répétitif de formule (II) suivante : 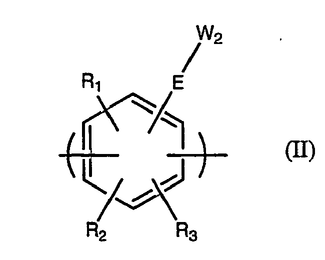 dans laquelle les R¹, R², R³, E et W₂ répondent à la même définition que celle donnée dans la revendication 1 avec au moins un composé de formule (III) suivante : 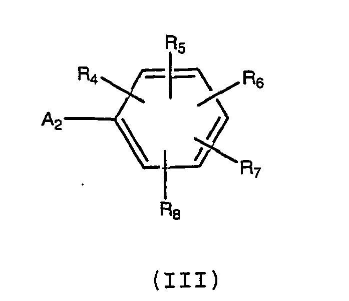 dans laquelle les R₄, R₅, R₆, R₇ et R₈ sont tels que définis dans la revendication 1, le groupe A₂ est un groupe OH, -SH, NH₂, -NHR avec R répondant à la même définition que R₉ de la revendication 1, ledit groupe A₂ étant apte à assurer la substitution nucléophile aromatique d'un groupe porté par W₂, ce groupe pouvant être un groupe F, -O-SO₂-Aryle ou -S(=O)-Aryle.

12. Membrane comprenant le polymère sulfoné selon l'une quelconque des revendications 1 à 10.

13. Dispositif de pile à combustible comprenant au moins une membrane selon la revendication 12.

## Claims

1. A polymer, the skeleton of which consists of at least one phenylene repeating unit of formula (I) below: 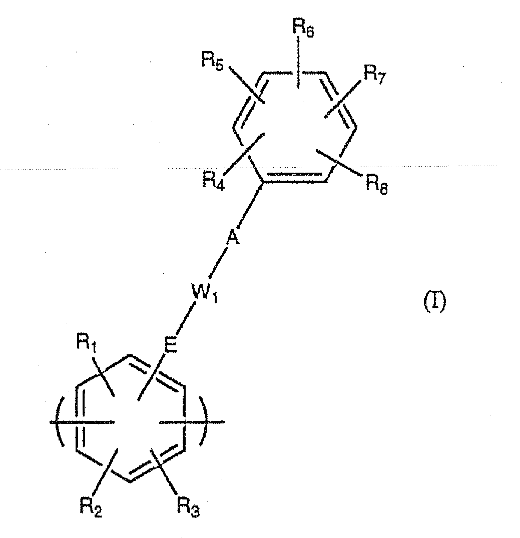 and of at least one phenylene repeating unit of formula (II) below: 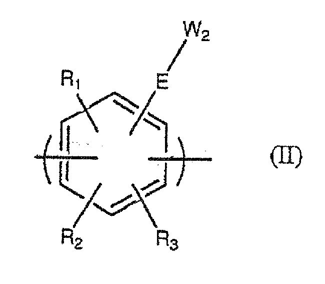 in which:
- the groups R₁, R₂ and R₃, which may be identical or different, represent a hydrogen atom, a halogen atom, an alkyl group, which can include in its chain one or more groups chosen from among O, S and/or N, an aryl group, a perfluoroalkyl group or a perfluoroaryl group;
- the group E represents a single bond or a group chosen from -(C=O)-, -P(=O)- and -SO₂-;
- the group W₁ represents an arylene group or a perfluoroarylene group;
- the group A represents a group chosen from -0-, -S-, -NH- and -NR₉-, R₉ being an alkyl group;
- the group W₂ represents an aryl group substituted with at least one substituent chosen from F, -O-SO₂₋Aryl, -S(=O)-Aryl or represents a perfluoroaryl group;
- the groups R₄, R₅, R₆, R₇ and R₈, which may be identical or different, represent a group chosen from:
- a hydrogen atom, a halogen atom, an -OH group, a group -M(R₁₀)₃ with R₁₀ representing an alkyl group and M a metal chosen from Si, Sn and Ge;
- a group -P (=O) (OR₁₁)₂ with R₁₁ representing an alkyl group;
- an aryl group, a group -0-Aryl, a group -SO₂₋aryl, an alkylaryl group, a perfluoroalkyl group or a perfluoroalkylaryl group, said alkyl, perfluoroalkyl and perfluoroalkylaryl groups optionally comprising in their chain one or more oxygen, nitrogen and/or sulfur atoms;
- a perfluoroaryl group or a group -O-perfluoroaryl, said perfluoroalkyl, perfluoroaryl, perfluoroalkylaryl and -O-perfluoroaryl groups optionally bearing a group chosen from -SO₃H, -PO₃H₂ and -CO₂H;
- an -SO₃H group, a -PO₃H₂ group or a -CO₂H group;
on condition that at least one of the groups R₄, R₅, R₆, R₇ and R₈ represents a group chosen from -SO₃H, -PO₃H₂ and -CO₂H groups, perfluoroalkyl groups, perfluoroalkylaryl groups optionally comprising in their chain one or more oxygen, nitrogen and/or sulfur atoms, perfluoroaryl groups and -O-perfluoroaryl groups, these perfluoro groups bearing a group chosen from -SO₃H, -PO₃H₂ and -CO₂H,
said -SO₃H, -PO₃H₂ and -CO₂H groups possibly being in the form of alkali metal salts.

2. The polymer as claimed in claim 1, the molecular weight of which is greater than or equal to 50 000, preferably from 50 000 to 150 000.

3. The polymer as claimed in claim 1 or 2, in which the phenylene groups of the skeleton are in the para position relative to each other.

4. The polymer as claimed in any one of the preceding claims, which is a random, alternating or sequential polymer.

5. The polymer as claimed in any one of claims 1 to 4, comprising from 40 to 50 mol% of the repeating unit(s) of formula (I) and from 60 to 50 mol% of the repeating unit(s) of formula (II).

6. The polymer as claimed in any one of claims 1 to 5, in which at least one of the groups R₄, R₅, R₆, R₇ and R₈ represents a perfluoroalkyl group, comprising in its chain one or more oxygen, nitrogen and/or sulfur atoms, said group bearing a group chosen from -SO₃H, -PO₃H₂ and -CO₂H or its alkali metal salts.

7. The polymer as claimed in any one of claims 1 to 5, in which, for the repeating unit(s) of formula (I), at least one of the groups R₄, R₅, R₆, R₇ and R₈ represents a group chosen from -SO₃H, -PO₃H₂ and -CO₂H, and, for the unit(s) of formula (II), W₂ is an aryl group bearing a fluorine leaving group.

8. The polymer as claimed in claim 7, the skeleton of which consists of repeating units of formulae (Ia) and (IIa) below:

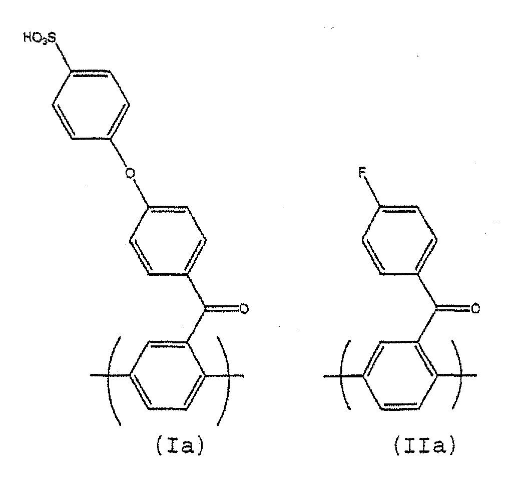

9. The polymer as claimed in any one of claims 1 to 6, in which, for the repeating unit(s) of formula (I), at least one of the groups R₄, R₅, R₆, R₇ and R₈ represents a perfluoroalkyl group chosen from the groups having the following formulae:
- (CF₂)ₙ-O-(CF₂)ₙ-SO₃H, -(CF₂)ₙ-SO₃H, -O- (CF₂)ₙ-SO₃H, -O-(CF₂)ₙ-O-(CF₂)ₙ-SO₃H, n ranging from 1 to 10, and, for the repeating unit(s) of formula (II), W₂ represents an aryl group bearing a fluorine atom.

10. The polymer as claimed in claim 9, the skeleton of which consists of repeating units of formulae (Ib) and (IIa) below:

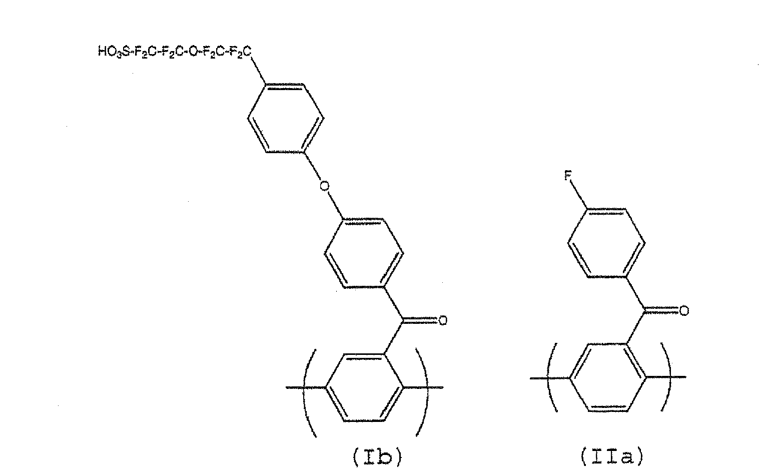

11. A process for preparing a polymer as claimed in claim 1 or 2, comprising the reaction of a base polymer whose skeleton consists of at least one repeating unit of formula (II) below: 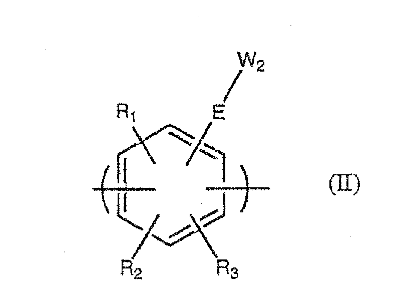 in which R₁, R₂, R₃, E and W₂ correspond to the same definition as that given in claim 1, with at least one compound of formula (III) below: 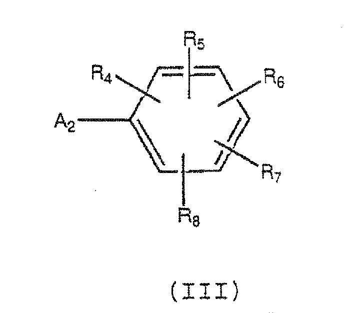 in which R₄, R₅, R₆, R₇ and R₈ are as defined in claim 1, the group A₂ is an OH, -SH, NH₂ or -NHR group with R corresponding to the same definition as R₉ of claim 1, said group A₂ being capable of effecting the aromatic nucleophilic substitution of a group borne by W₂, this group possibly being an F, -O-SO₂-Aryl or -S(=O)-Aryl group.

12. A membrane comprising the sulfonated polymer as claimed in any one of claims 1 to 10.

13. A fuel cell device comprising at least one membrane as claimed in claim 12.

## Patentansprüche

1. Polymer, dessen Grundgerüst besteht aus mindestens einer wiederkehrenden Phenyleneinheit der folgenden Formel (I): 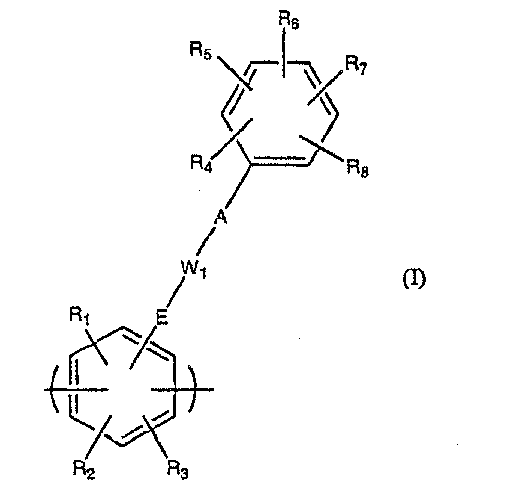 und mindestens einer wiederkehrenden Phenyleneinheit der folgenden Formel (II): 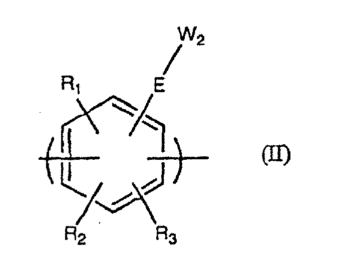 worin:
- die Gruppen R₁, R₂, R₃, die gleich oder verschieden sind, ein Wasserstoffatom, ein Halogenatom, eine Alkylgruppe, die in ihrer Kette eine oder mehrere Atome aus der Gruppe O, S und/oder N aufweisen kann, eine Arylgruppe, eine Perfluoralkylgruppe oder eine Perfluorarylgruppe darstellen;
- die Gruppe E eine einfache Bindung oder eine Gruppe, ausgewählt aus -(C=O)-, -P(=O)-, -SO₂-, darstellt;
- die Gruppe W₁ eine Arylengruppe, eine Perfluorarylengruppe darstellt;
- die Gruppe A eine Gruppe darstellt, ausgewählt aus -O-, -S-, -NH-, - NR₉-, worin R₉ für eine Alkylgruppe steht;
- die Gruppe W₂ eine Arylgruppe, substituiert durch mindestens einen Substituenten, ausgewählt aus F, -O-SO₂-Aryl, -S(=O)-Aryl, oder eine Perfluoralkylgruppe darstellt;
- die Gruppen R₄, R₅, R₆, R₇, R₈, die gleich oder verschieden sind, eine Gruppe darstellen, ausgewählt aus:
- einem Wasserstoffatom, einem Halogenatom, einer -OH-Gruppe, einer -M(R₁₀)₃-Gruppe, worin R₁₀ eine Alkylgruppe darstellt und M ein Metall darstellt, ausgewählt aus Si, Sn, Ge;
- einer Gruppe -P(=O) (OR₁₁)₂,worin R₁₁ für eine Alkylgruppe steht;
- einer Arylgruppe, einer O-Arylgruppe, einer -SO₂-Arylgruppe, einer Alkylarylgruppe, einer Perfluoralkylgruppe, einer Perfluoralkylarylgruppe, wobei die genannten Alkyl-, Perfluoralkyl- und Perfluoralkylarylgruppen gegebenenfalls in ihrer Kette eine oder mehrere Sauerstoff-, Stickstoff- und/oder Schwefelatome aufweisen;
- einer Perfluorarylgruppe, einer perfluorierten -O-Arylgruppe, wobei die genannten Perfluoralkyl-, Perfluoraryl-, Perfluoralkylaryl-, perfluorierten -O-Arylgruppen gegebenenfalls eine Gruppe, ausgewählt aus -SO₃H, -PO₃H₂, -CO₂H, tragen;
- einer -SO₃H-Gruppe, einer -PO₃H₂-Gruppe, einer -CO₂H-Gruppe; mit der Maßgabe, dass mindestens eine der Gruppen R₄, R₅, R₆, R₇, R₈ darstellt eine Gruppe, ausgewählt aus den Gruppen -SO₃H, -PO₃H₂, -CO₂H, den Perfluoralkyl-Gruppen, den Perfluoralkylaryl-Gruppen, die gegebenenfalls in ihrer Kette ein oder mehrere Sauerstoff-, Stickstoff- und/oder Schwefelatome enthalten, den Perfluoraryl-Gruppen, den perfluorierten -O-Aryl-Gruppen, wobei diese perfluorierten Gruppen eine Gruppe tragen, ausgewählt aus -SO₃H, -PO₃H₂, -CO₂H, wobei die genannten Gruppen SO₃H, -PO₃H₂, -CO₂H in Form ihrer Alkalimetallsalze vorliegen können.

2. Polymer nach Anspruch 1, dessen Molekulargewicht ≥ 50 000, vorzugsweise 50 000 bis 150 000, beträgt.

3. Polymer nach Anspruch 1 oder 2, in dem die Phenylengruppen des Grundgerüsts in p-Position zueinander vorliegen.

4. Polymer nach einem der vorhergehenden Ansprüche, bei dem es sich um ein statistisches, alternierendes oder sequentielles Polymer handelt.

5. Polymer nach einem der Ansprüche 1 bis 4, das 40 bis 50 Mol-% der wiederkehrenden Einheit(en) der Formel (I) und 60 bis 50 Mol-% der wiederkehrenden Einheit(en) der Formel (II) enthält.

6. Polymer nach einem der Ansprüche 1 bis 5, in dem mindestens eine der Gruppen R₄, R₅, R₆, R₇, R₈ darstellt eine Perfluoralkylgruppe, die in ihrer Kette ein oder mehrere Sauerstoff-, Stickstoff- und/oder Schwefelatome aufweist, wobei die genannte Gruppe eine Gruppe trägt, ausgewählt aus -SO₃H, -PO₃H₂, -CO₂H oder ihren Alkalimetallsalzen.

7. Polymer nach einem der Ansprüche 1 bis 5, in dem in der (den) wiederkehrenden Einheit(en) der Formel (I) mindestens einer der Reste R₄, R₅, R₆, R₇, R₈ eine Gruppe darstellt, ausgewählt aus -SO₃H, -PO₃H₂, -CO₂H, und in der (den) wiederkehrenden Einheit(en) der Formel (II) W₂ eine Arylgruppe darstellt, die eine Fluor enthaltende Gruppe trägt.

8. Polymer nach Anspruch 7, dessen Grundgerüst aus wiederkehrenden Einheiten der folgenden Formel (la) und (IIa) besteht:

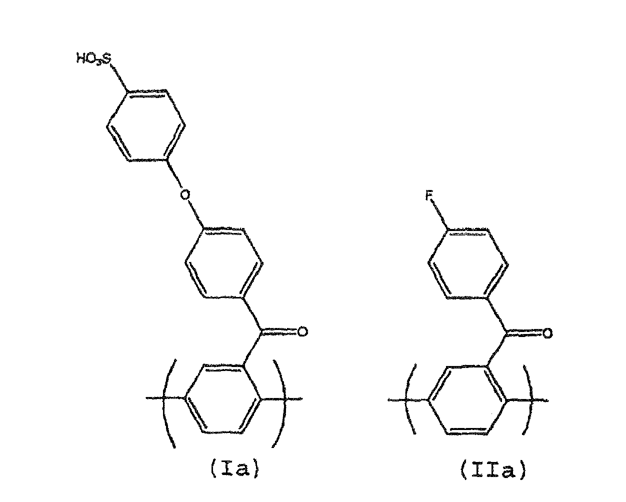

9. Polymer nach einem der Ansprüche 1 bis 6, in dem in der oder den wiederkehrenden Einheit(en) der Formel (I), mindestens einer der Reste R₄, R₅, R₆, R₇, R₈ eine Perfluoralkylgruppe darstellt, ausgewählt aus Gruppen mit der folgenden Formel:
-(CF₂)ₙ-O-(CF₂)ₙ-SO₃H, -(CF₂)ₙ-SO₃H, -O-(CF₂)ₙ-SO₃H, -O-(CF₂)ₙ-O-(CF₂)ₙ₋SO₃H, worin n eine Zahl von 1 bis 10 darstellt, und
in der oder den wiederkehrenden Einheit(en) der Formel (II) W₂ eine Arylgruppe darstellt, die ein Fluoratom trägt.

10. Polymer nach Anspruch 9, dessen Grundgerüst besteht aus wiederkehrenden Einheiten der folgenden Formeln (Ib) und (IIa):

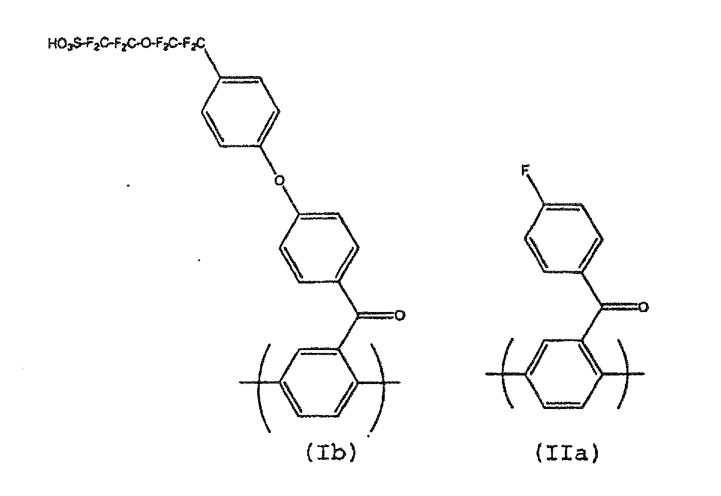

11. Verfahren zur Herstellung eines Polymers nach Anspruch 1 oder 2, das umfasst die Umsetzung eines Basispolymers, dessen Grundgerüst besteht aus mindestens einer wiederkehrenden Einheit der folgenden Formel (II): 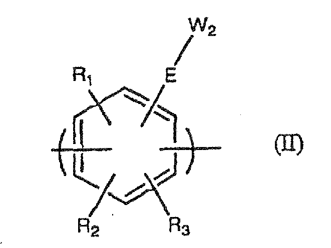 in der R₁, R₂, R₃, E und W₂ die gleichen Bedeutungen haben wie in Anspruch 1 angegeben,
mit mindestens einer Verbindung der folgenden Formel (III) 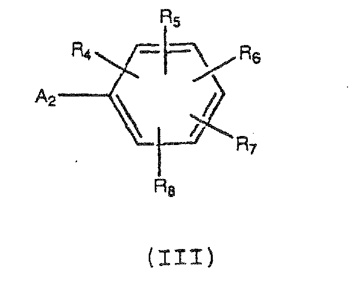 in der R₄, R₅, R₆, R₇ und R₈ wie in Anspruch 1 definiert sind, die Gruppe A₂ steht für eine Gruppe OH, -SH, NH₂, -NHR, worin R die gleiche Bedeutung wie R₉ im Anspruch 1 hat, wobei die genannte Gruppe A₂ geeignet ist, die aromatische nucleophile Substitution einer Gruppe, die von W₂ getragen wird, sicherzustellen, wobei es sich bei dieser Gruppe um eine Gruppe F, -O-SO₂-Aryl oder -S(=O)-Aryl handeln kann.

12. Membran, die das sulfonierte Polymer nach einem der Ansprüche 1 bis 10 umfasst.

13. Brennstoffelement, das mindestens eine Membran nach Anspruch 12 umfasst.
